# FASCICULE DE BREVET EUROPEEN

(11) **EP 0 446 113 B1**
(45) Date de publication et mention de la délivrance du brevet: **30.03.1994**
(21) Numéro de dépôt: 91400576.4
(22) Date de dépôt: 01.03.1991
(51) Int. Cl.: G01V 1/40

(54) **Méthode et dispositif de diagraphie dans des puits utilisant des moyens d'émission et/ou de réception directifs**
Bohrlochmessverfahren und -gerät mit gerichteten Sende- und/oder Empfangsmitteln
Method and apparatus for well logging using directional means for emission and/or reception

(30) Priorité: 06.03.1990 FR 9002909
(43) Date de publication de la demande: 11.09.1991
(73) Titulaire: INSTITUT FRANCAIS DU PETROLE, 92502 Rueil-Malmaison (FR)
(72) Inventeur: Mari, Jean-Luc, F-78400 Chatou (FR); Lessi, Jacques, F-78580 Maule (FR); Gaudiani, Pierre, F-92290 Fontenay-aux-Roses (FR)

(56) Documents cités:
- EP-A- 0 100 728
- EP-A- 0 371 870
- FR-A- 2 145 100
- GB-A- 2 094 473
- US-A- 3 426 865

## Description

L'invention a pour objet une méthode et un dispositif d'acquisition et de traitement de signaux obtenus dans des puits et notamment des puits ou forages déviés sensiblement horizontaux traversant une zone souterraine, permettant une bonne discrimination entre les discontinuités du sous-sol. Elle s'applique particulièrement bien pour faire la discrimination entre des discontinuités géologiques orientées sensiblement dans la même direction que le puits et situées de part et d'autre de celui-ci, sur des enregistrements obtenus au moyen d'un outil de diagraphie déplacé dans le puits. Par puits déviés, on entend les puits dont une partie au moins est sensiblement horizontale ou relativement peu inclinée par rapport à l'horizontale.

L'investigation d'une zone du sous-sol susceptible par exemple de contenir des hydrocarbures peut être réalisée en forant un puits au travers de la zone et en descendant à l'intérieur un outil de diagraphie comportant une ou plusieurs unités d'émission adaptées à émettre des signaux dans les formations géologiques autour du puits et une ou plusieurs unités de réception pour recevoir les signaux réfléchis et réfractés par les discontinuités du sous-sol plus ou moins proches du puits. Les signaux reçus sont généralement transmis à un laboratoire en surface et enregistrés. Les enregistrements sont ensuite traités de manière à les rendre plus lisibles par l'interprétateur. Les signaux émis et reçus peuvent être de nature très différente. Il peut s'agir par exemple d'ondes acoustiques, d'ondes électro-magnétiques etc. La méthode selon l'invention va être décrite ci-après en relation avec une utilisation d'ondes acoustiques. Mais il va de soi qu'il ne s'agit que d'un cas particulier quine saurait restreindre la généralité de la méthode.

Les forages sont souvent verticaux ou sensiblement verticaux. Mais dans les zones du sous-sol que les géologues estiment les plus susceptibles de recéler des gisements exploitables : hydrocarbures, charbon, lignite etc, il est courant de réaliser des forages très fortement inclinés par rapport à la verticale et même sensiblement horizontaux de façon à traverser les couches souterraines sous un angle faible et d'obtenir des informations sur le toit et le mur (ou base) d'un volume d'exploitation éventuel. Il importe dans ces conditions, de faire la discrimination entre les ondes reçues provenant des formations au-dessus et au-dessous du forage. Cela est possible tant que le pendage des réflecteurs par rapport à la direction du puits n'est pas trop faible et qu'il est de même signe vers le toit et le mur de la zone traversée ou réservoir. Si tel est le cas, les vitesses apparentes des signaux acoustiques reçus (événements) de part et d'autre du puits sont de signes opposés et l'on peut les dissocier en employant une méthode classique de filtrage en vitesse apparente, comme il est bien connu en géophysique.

Un procédé de prospection applicable dans des puits faiblement inclinés par rapport à l'horizontale est décrit par exemple dans la demande de brevet européen EP 246 148.

La discrimination sur les diagraphies des signaux provenant respectivement du mur et du toit d'un réservoir devient très difficile lorsque le pendage relatif des réflecteurs par rapport à la direction du puits est quasiment nul ou réduit à quelques degrés du fait que ces signaux ont des vitesses apparentes très voisines.

Cette configuration qui est fréquente dans les puits très déviés ou horizontaux, se retrouve aussi dans les parties verticales ou à faible inclinaison des forage traversant une zone de failles ayant sensiblement la même orientation. On sait aussi que le pourtour d'un puits, quelle que soit sa direction, est généralement altéré par la boue qui a été utilisée lors du forage et s'est infiltrée dans les formations. La vitesse de propagation des ondes dans cette zone périphérique est de ce fait différente de celle dans les formations alentour et des réflexions parasites se produisent donc sur les interfaces sensiblement parallèles à la direction du puits. Là encore, la discrimination sur les enregistrements entre les ondes réfléchies provenant respectivement des côtés opposés du puits est rendu pratiquement impossible.

Dans la demande de brevet français 2 639 719 est décrit un système d'acquisition et de traitement des signaux dans des puits qui rend possible une bonne discrimination entre les discontinuités géologiques situées de part et d'autre de ces puits et ayant sensiblement la même orientation que lui, notamment dans des puits déviés traversant des zones-réservoirs. Les signaux sont acquis au moyen d'un outil de diagraphie dans lequel les transducteurs émetteurs et récepteurs peut être déplacés transversalement par rapport au puits. Ce déplacement peut être obtenu en utilisant un outil de diagraphie comportant un corps relié par des bras mobiles à des patins d'ancrage contre les parois du puits et en déplaçant le corps relativement aux patins par une ouverture contrôlée des bras. Le déplacement peut encore être obtenu par déplacement des transducteurs relativement au corps de la sonde. On réalise au moins deux séries de cycles d'émission-réception le long d'une même portion de puits, la position des transducteurs relativement à la section du puits étant différente au cours de chacune des séries, et l'on combine les sections d'enregistrement obtenus respectivement au cours des deux séries, de manière à réaliser des sections où les discontinuités de part et d'autre du puits, sont séparées les unes des autres. La méthode précédente convient particulièrement à la discrimination et la mise en valeur des discontinuités de part et d'autre d'un puits mais elle ne procure pas d'atténuation suffisante des ondes réfractées et des ondes dites de Stoneley.

La méthode selon l'invention permet, comme la méthode décrite dans la demande de brevet français 2 639 719, de faciliter la discrimination des discontinuités géologiques situées de part et d'autre d'un puits et ayant sensiblement la même orientation que lui. Elle comporte l'utilisation d'un outil de diagraphie pourvu de moyens d'émission et de réception pour émettre des signaux et recevoir les signaux émanant des formations environnantes en réponse aux signaux transmis, et de moyens pour déplacer l'outil le long du puits. La méthode est caractérisée en ce qu'elle comporte
- l'utilisation de moyens pour rendre directionnels une partie au moins de l'ensemble des moyens d'émission et de réception en donnant ainsi à cet ensemble une configuration particulière de directivité;
- la réalisation avec l'outil de diagraphie d'au moins une série de cycles d'émission-réception de signaux en déplaçant l'outil le long du puits l'ensemble d'émission-réception étant dans une configuration déterminée identique pour tous les cycles de la série, de manière à obtenir au moins un premier jeu d'enregistrements des signaux renvoyées par les discontinuités autour du puits,
- la répétition de l'étape précédente avec un ensemble d'émission-réception ayant une configuration différente de la première, de manière à obtenir un deuxième jeu d'enregistrements; et
- la comparaison de différents jeux d'enregistrement obtenus pour faire la discrimination entre les discontinuités géologiques.

On utilise par exemple des moyens d'émission pourvus d'un diagramme de directivité d'ouverture relativement étroite.

La méthode comporte par exemple la comparaison des enregistrements obtenus avec les moyens d'émission et/ou de réception directionnels et des enregistrements obtenus avec d'autres moyens d'émission et/ou de réception directionnels ayant un autre diagramme de directivité.

Suivant un mode de réalisation, on modifie entre chacune desdites séries de cycles, l'orientation de chaque diagramme directionnel.

La méthode peut comporter la réalisation d'au moins deux séries de cycles d'émission-réception avec les mêmes moyens d'émission et/ou de réception directionnels en changeant pour chacune d'elles la position transversale des moyens d'émission et/ou de réception relativement à l'axe du puits, l'une au moins desdites séries étant réalisée avec des moyens d'émission et/ou de réception directionnels.

Suivant un mode de réalisation, à chaque position transversale desdits moyens d'émission et/ou de réception, on fait correspondre un diagramme de directivité particulier.

La méthode peut comporter aussi l'utilisation de moyen de réception directifs dont le diagramme de directivité est orienté suivant une direction différente de celle où l'émission est effectuée préférentiellement, de manière à capter des arrivées d'ondes ayant subi plus d'une réflexion.

Le dispositif pour la mise en oeuvre de la méthode est caractérisé en ce qu'il comporte en combinaison une sonde de diagraphie pour puits, des moyens de manoeuvre pour déplacer la sonde le long du puits, au moins une source d'émission de signaux, des moyens de réception des signaux émis renvoyés par les discontinuités autour du puits, des moyens pour rendre directionnels ladite source et/ou les moyens de réception des signaux, des moyens de transmission des signaux reçus à un ensemble d'enregistrement en surface et des moyens de traitement des enregistrements obtenus.

La source comporte par exemple un élément d'émission de signaux et un moyen d'absorption de signaux disposé sur une partie au moins du pourtour de l'ensemble d'émission.

Les moyens de réception peuvent aussi comporter au moins un récepteur associé à un moyen d'absorption disposé autour dudit récepteur.

Chaque moyen d'absorption sélectif est constitué par exemple d'un cache pourvu d'une fenêtre allongée transparente aux signaux émis.

Comme on le verra de façon concrète dans la description qui suit, la combinaison d'enregistrements ou logs obtenus à l'issue de séries de cycles d'émission-réception réalisés avec des changements de diagrammes de directivité permet de mettre en évidence des réflexions autrement masquées par des arrivées parasites et donc de faire apparaître plus aisément des discontinuités de part et d'autre du puits.

D'autres caractéristiques et avantages de la méthode et du dispositif selon l'invention apparaitront mieux à la lecture de la description ci-après de modes de réalisation décrits à titre d'exemples non limitatifs, en se référant aux dessins annexés où :
- la Fig.1 montre schématiquement un outil de diagraphie où les moyens d'émission comportent un moyen d'absorption sélectif,
- la fig.2 montre schématiquement un exemple de cache adaptable aux moyens d'émission et/ou de réception de l'outil de diagraphie;
- la Fig.3 montre une vue en coupe du même cache;
- la Fig.4 montre un exemple de diagramme de directivité obtenu avec un cache tel que celui des Fig. 2 ou 3;
- la Fig.5 montre un modèle physique représentatif de différentes interfaces rencontrées par les signaux émis dans un puits équipé par exemple d'un tube de cuvelage;

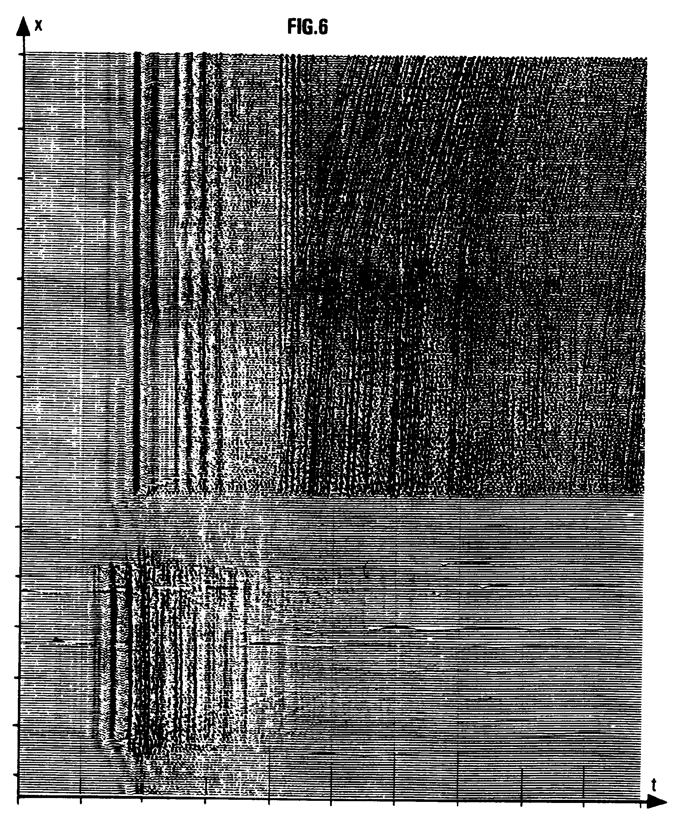

- la Fig.6 montre une série d'enregistrements ou logs obtenus en déplaçant un outil de diagraphie dans un dispositif de modélisation du sous-sol, la source étant dépourvue de cache;

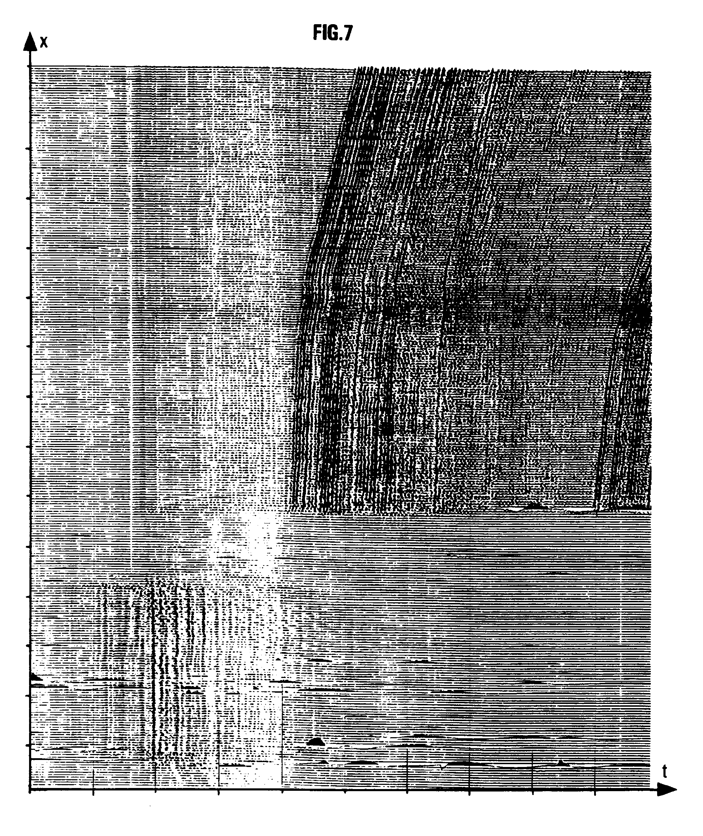

- la Fig.7 montre une série d'enregistrements obtenus dans les mêmes conditions mais avec une source équipée d'un cache;
- la Fig.8 montre plus en détail une partie des enregistrements de la Fig.6 relative à une portion du même dispositif de modélisation, la source étant dépourvue de cache; et
- la Fig.9 montre plus en détail une partie des enregistrements de la Fig.7 relative à la même portion du dispositif de modélisation, obtenus avec une source équipée d'un cache.
- la Fig.10 montre schématiquement un outil de diagraphie tel que celui de la Fig.1 descendu dans une partie déviée d'un puits.

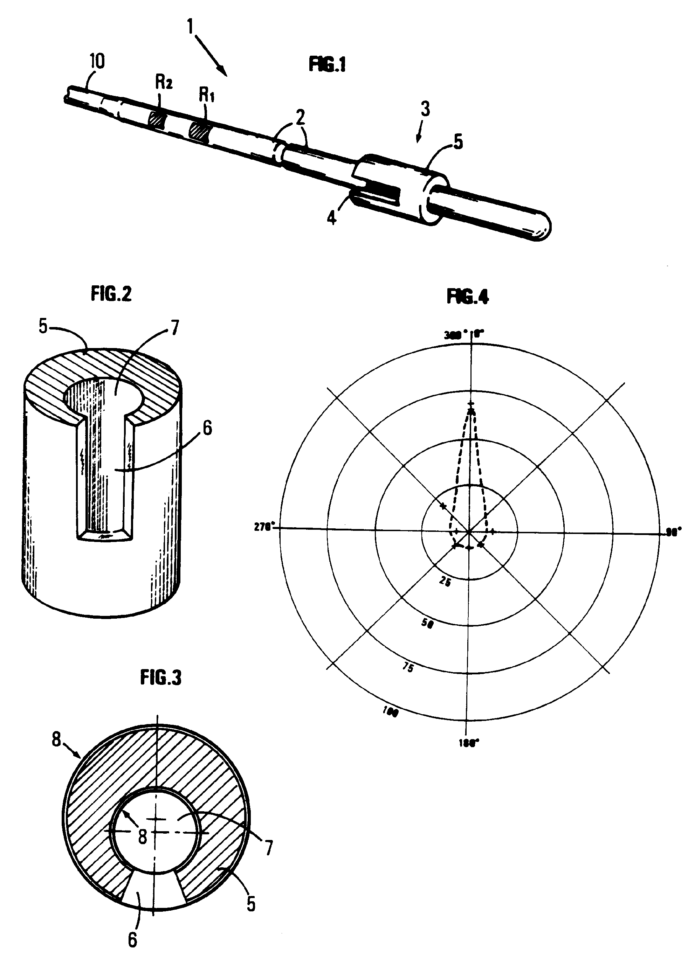

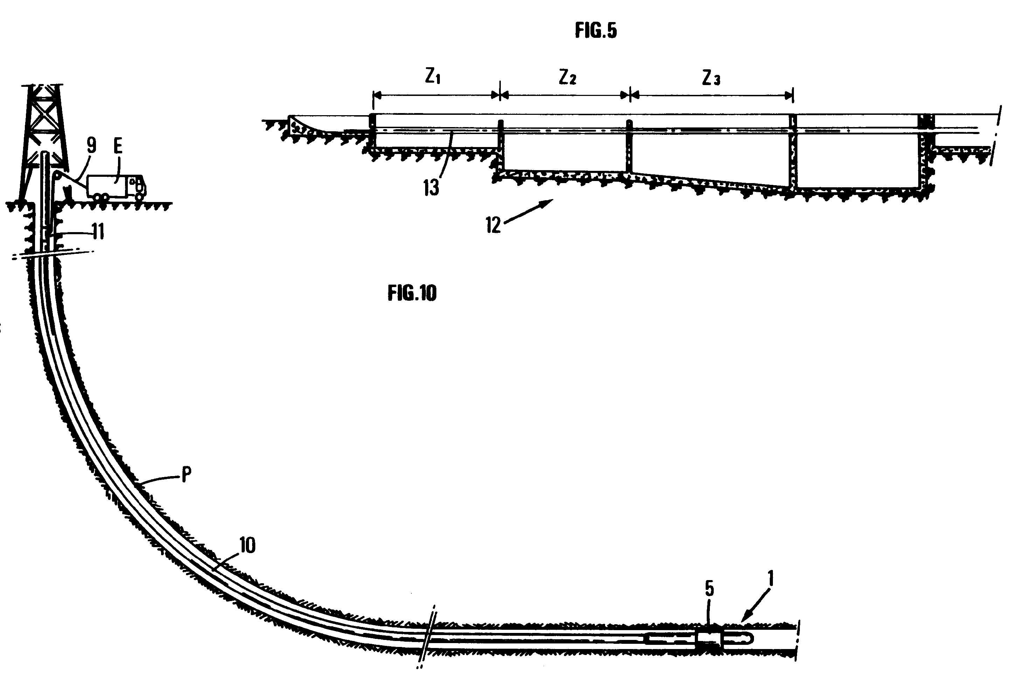

L'outil de diagraphie 1 représenté aux Fig.1 comporte un corps tubulaire 2. Vers une première extrémité du corps est disposé un moyen d'émission directionnel de signaux 3. Ce moyen comporte par exemple un émetteur 4 non directif d'un type quelconque émettant des ondes acoustiques dans toutes les directions autour de l'outil. Autour de l'émetteur 4 est disposé un moyen d'absorption directionnel. Ce moyen est constitué par exemple (Fig. 2, 3) d'un manchon ou cache 5 réalisé en un matériau absorbant les ondes acoustiques et pourvu d'une fenêtre 6 transparente à ces mêmes ondes. Cette fenêtre transparente peut être obtenue par exemple en ménageant une ouverture latérale dans la paroi du manchon sur une certaine longueur de celui-ci. Avec une ouverture suivant un secteur angulaire de 60° par exemple, on obtient un diagramme directionnel analogue à celui montré à la Fig.4. Le section intérieure du manchon 5 est adaptée à la section extérieure du corps 2 de l'outil. Le passage intérieur 7 du manchon est de préférence excentré du côté de la fenêtre de manière à renforcer l'absorption des ondes dans la direction opposée à cette fenêtre 6.

Le manchon 5 est moulé dans un matériau absorbant les ondes acoustiques et il est revêtu d'une enveloppe protectrice 8, sur sa face interne et sa face externe. Il est adapté autour du corps de l'outil à l'emplacement de l'émetteur 4.

L'émetteur 3 peut être constitué d'un transducteur, d'un étinceleur ou sparker d'un type connu etc. Ces exemples ne sont pas limitatifs.

A une certaine distance vers l'extrémité opposée du corps 2, sont disposés des moyens de réception ou récepteurs constitués par exemple de deux transducteurs R1 et R2.

Cette sonde est reliée à un ensemble de commande et d'enregistrement E en surface (Fig.10) par un câble d'alimentation et de transmission 9. Elle est descendue et poussée jusque dans des parties déviées de puits P à l'extrémité d'une colonne tubulaire assez rigide 10. Le câble 9 est de préférence à l'intérieur de la colonne. Il passe à l'extérieur de celle-ci pour être relié au laboratoire E, par un raccord spécial à fenêtre latérale ou "side entry sub" 11 d'un type connu. Un tel agencement est décrit par exemple dans la demande de brevet français 2 544 013 ou dans la demande de brevet américain US 4 690 214.

Les récepteurs R1, R2 peuvent aussi être directifs. Il est possible d'utiliser des récepteurs possédant par construction un diagramme de réception directionnel ou bien encore des moyens de réception non ou peu directionnels et disposer autour des caches analogues au cache 5 entourant la source 4.

Avec un tel outil de diagraphie modifié pour rendre directionnels les moyens d'émission et/ou les moyens de réception, on arrive à mettre en évidence des discontinuités qui autrement seraient indiscernables sur les enregistrements, masquées par des arrivées parasites.

La source d'émission et/ou les moyens de réception étant rendus directionnels avec un diagramme de directivité orienté par exemple vers un même côté du puits, on procède à une première série de logs en déplaçant l'outil 1 tout le long de la portion de puits traversant une zone à explorer.

Le cache 5 autour de l'un au moins des deux récepteurs R1, R2 est orienté soit dans la même direction sensiblement que celui associé à l'émetteur de manière à capter préférentiellement les arrivées directes d'ondes réfléchies. Cependant le cache autour de l'un au moins des deux récepteurs peut aussi être orienté suivant la direction opposée de manière à recevoir préférentiellement les arrivées doublement réfléchies que l'on veut plus facilement discriminer des précédentes.

Avec une source d'émission et/ou des moyens de réception dont le diagramme de directivité est différent de celui utilisé pour la première série, on procède à une seconde série de logs acoustiques. Pour cette deuxième série de logs, on peut éventuellement utiliser une source et des moyens de réception sans cache. Mais on emploie avantageusement une source et/ou des moyens de directivité dont le diagramme directionnel est comparable avec une orientation sensiblement à l'opposé de celle choisie pour la première série de logs. Le pivotement du ou de chaque diagramme de directivité peut être obtenu simplement avec le cache décrit précédemment en le faisant tourner de manière à changer l'orientation de la fenêtre 6.

Par des comparaisons des logs faites par des moyens de traitement dans le laboratoire E en surface et en utilisant des méthodes connues dites de moyenne et d'anti-moyenne et un filtrage passe-bande, on peut alors éliminer nombre d'arrivées parasites très énergiques et notamment celles qui sont dues au tube de cuvelage (ou casing) et faire mieux apparaître les arrivées réfléchies.

La méthode selon l'invention peut en outre être combinée avec celle décrite dans la demande de brevet français 2 639 719 citée où la position de l'outil relativement à la section du puits est modifiée par excentrement entre deux séries de logs successifs. Dans chacune des séries de logs successivement effectués, on dirige les moyens d'émission et/ou les moyens de réception de manière que leurs diagrammes de directivité soient orientés par exemple du côté du puits le plus proche de l'outil et l'on procède à une comparaison analogue des enregistrements. Par cette combinaison des effets de directivité et d'excentrement, on amplifie encore le filtrage et la mise en évidence des arrivées réfléchies.

De la même façon que précédemment, au moins un des récepteurs directifs peut être orienté sensiblement dans la direction opposée à celle choisie préférentiellement pour l'émission pour capter des arrivées provenant du côté opposé du puits ayant subi plus d'une réflexion.

L'effet de clarification des logs acoustiques obtenus avec des moyens directionnels a été vérifié expérimentalement sur un dispositif de modélisation 12 tel que celui schématisé à la Fig.5.

Le dispositif de modélisation 12 est installé dans une tranchée creusée dans le sol. Il est constitué essentiellement d'un bloc dont la paroi est en béton et qui comporte plusieurs compartiments Z1, Z2, Z3 séparés les uns des autres par des cloisons. Le fond du premier compartiment Z1 est sensiblement plat et il est rempli de béton. Les compartiments Z2 et Z3 contiennent de l'eau. Le fond de ces deux compartiments présente une légère pente, de 1 à 2° pour le compartiment Z2 et de 5 à 9° pour le compartiment Z3. Une goulotte de support 13 sensiblement horizontale, est ménagée à la partie supérieure des trois compartiments Z1 à Z3. Au niveau du premier compartiment, la goulotte est réalisée en béton. Au niveau des deux suivants, elle est constituée d'une portion de tube suspendue dans l'eau et réalisée en PVC par exemple. Un outil de diagraphie analogue à celui schématisé à la Fig.1 a été déplacé tout au long de la goulotte 13 et des logs acoustiques comparatifs ont été effectués avec un émetteur 3 sans cache et avec un émetteur rendu directionnel par un cache à fenêtre 5. La fenêtre du cache est dirigée vers la base du bloc 13. On voit en comparant les logs obtenus dans les deux cas, que la directivité d'émission obtenue avec une source acoustique munie d'un cache, a pour effet d'atténuer très efficacement les arrivées d'ondes liées aux réfraction et réflexions sur les bords du dispositif de modélisation. L'effet est particulièrement visible au niveau des zones Z2 et Z3. En conséquence, les réflexions associées au socle c'est-à-dire le fond des compartiments apparaissent avec un rapport optimal du signal au bruit.

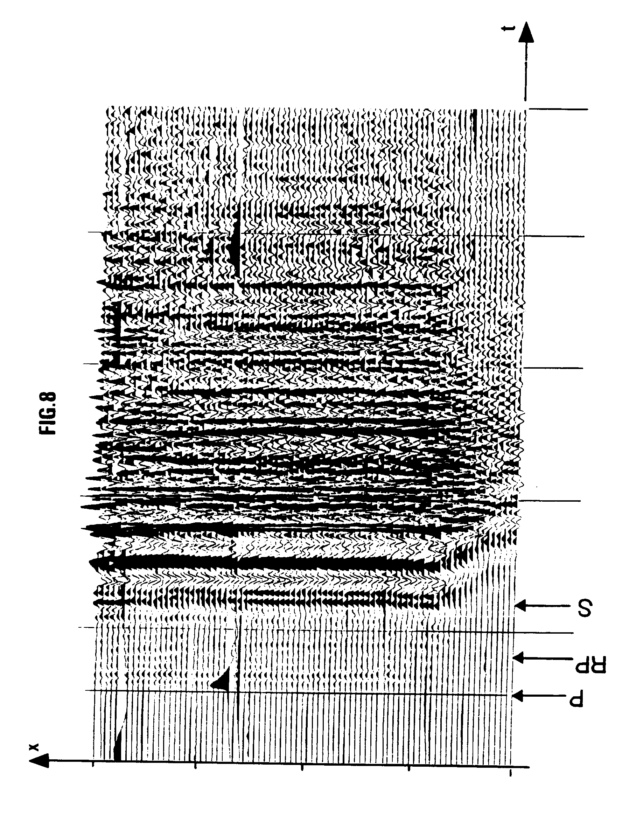

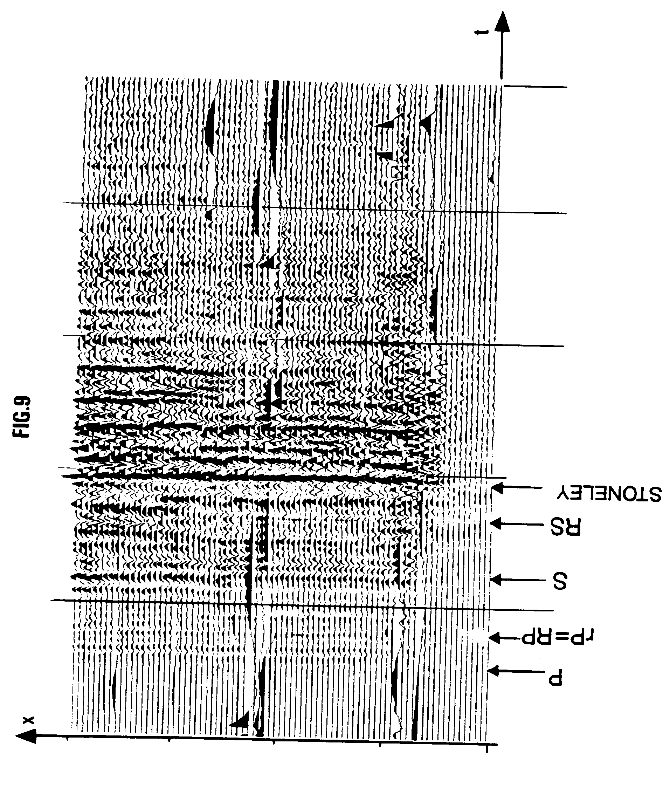

Les logs des Fig. 8 et 9 ont été obtenus au niveau de la zone Z1 du dispositif remplie de béton. Les premiers (Fig.8) correspondent à une source sans cache, les seconds, à une source avec cache. La comparaison des logs obtenus dans les deux cas montre qu'avec une source directionnelle, il est possible de pointer plus facilement les arrivées réfractées en ondes P (ondes de compression) et en ondes S (ondes de cisaillement). Sur les Fig. 8 et 9, les différentes arrivées sont notées :
- P : onde réfractée P dans le réservoir (terrain sous-jacent au dispositif de modélisation)
- S : onde réfractée S dans le réservoir
- rP : onde réfractée P sur le socle, mur du réservoir
- RP : onde réfléchie P sur le socle ou fond du dispositif de modélisation
- RS : onde réfléchie S sur le socle.

## Revendications

1. Méthode d'acquisition et de traitement de signaux obtenus dans un puits et notamment dans un puits dévié, facilitant la discrimination des discontinuités géologiques situées de part et d'autre du puits et ayant sensiblement la même orientation que lui, comportant l'utilisation d'un outil de diagraphie (1) pourvu de moyens d'émission de signaux (3) et de moyens de réception (R1, R2) pour recevoir les signaux émanant des formations environnantes en réponse aux signaux transmis, et de moyens pour déplacer l'outil le long du puits, caractérisée en ce qu'elle comporte
- l'utilisation de moyens (5) pour rendre directionnels une partie au moins de l'ensemble des moyens d'émission et de réception en donnant ainsi audit ensemble une configuration particulière de directivité;
- la réalisation avec l'outil de diagraphie d'au moins une série de cycles d'émission-réception de signaux en déplacant l'outil le long du puits, l'ensemble d'émission-réception étant dans une configuration déterminée identique pour tous les cycles de la série, de manière à obtenir au moins un premier jeu d'enregistrements des signaux renvoyées par les discontinuités autour du puits,
- la répétition de l'étape précédente avec un ensemble d'émission-réception ayant une configuration différente de la première, de manière à obtenir un deuxième jeu d'enregistrements; et
- la comparaison des différents jeux d'enregistrements obtenus pour faire apparaître des discontinuités géologiques.

2. Méthode selon la revendication 1, caractérisée en ce que l'on utilise des moyens d'émission pourvus d'un diagramme de directivité d'ouverture limitée.

3. Méthode selon la revendication 1 ou 2, caractérisée en ce que l'on compare les enregistrements obtenus avec les moyens d'émission et/ou de réception directionnels et des enregistrements obtenus avec d'autres moyens d'émission et/ou de réception directionnels ayant un autre diagramme de directivité.

4. Méthode selon la revendication 3, caractérisée en ce que l'on modifie entre chacun desdites séries de cycles, l'orientation de chaque diagramme directionnel.

5. Méthode selon l'une des revendications précédentes, caractérisée en ce que l'on réalise au moins deux séries de cycles d'émission-réception avec les moyens d'émission et/ou de réception en changeant pour chacune d'elles la position transversale des moyens d'émission et/ou de réception relativement à l'axe du puits, l'une au moins desdites séries étant réalisée avec des moyens d'émission et/ou de réception directionnels.

6. Méthode selon la revendication 5, caractérisée en ce qu'à chaque position transversale desdits moyens d'émission et/ou de réception, on fait correspondre un diagramme particulier de directivité.

7. Méthode selon l'une des revendications précédentes, caractérisée en ce que l'on utilise des moyens de réception directifs dont le diagramme de directivité est orienté suivant une direction différente de celle où l'émission a lieu préférentiellement, de manière à capteur des arrivées d'ondes ayant subit plus d'une réflexion.

8. Dispositif pour la mise en oeuvre de la méthode selon l'une des revendications 1 à 6, caractérisé en ce qu'il comporte en combinaison une sonde de diagraphie pour puits (1), des moyens de manoeuvre (10) pour déplacer la sonde le long du puits, au moins une source (3) d'émission de signaux, des moyens de réception des signaux émis renvoyés par les discontinuités autour du puits, des moyens (5) pour rendre directionnels ladite source et/ou les moyens de réception des signaux, des moyens de transmission des signaux reçus à un ensemble d'enregistrement (E) en surface et des moyens de traitement des enregistrements obtenus.

9. Dispositif selon la revendication 8, caractérisé en ce que la source directionnelle comporte un élément (4) d'émission de signaux et un moyen d'absorption (5) de signaux disposé sur une partie au moins du pourtour de l'ensemble d'émission.

10. Dispositif selon la revendication 9, caractérisé en ce que les moyens de réception comportent au moins un transducteur récepteur (R1, R2) associé à un moyen d'absorption disposé autour dudit transducteur.

11. Dispositif selon la revendication 9 ou 10, caractérisé en ce que chaque moyen d'absorption sélectif comporte un cache pourvu d'une fenêtre allongée (6) transparente aux signaux émis.

## Claims

1. A method for collecting and processing signals obtained in a well, particularly an inclined well, facilitating differentiation between geological discontinuities located on either side of the well and having substantially the same orientation as the well, involving the use of a logging tool (1) provided with means for emitting signals (3) and reception means (R1, R2) for receiving signals emanating from the surrounding formations in response to the transmitted signals and means for moving the tool along the well, characterised in that it consists in:
- using means (5) to render at least a part of the array of emission and reception means directional, thereby imposing a specific directional configuration on the unit;
- running at least one series of signal emission-reception cycles with the logging tool, by moving the tool along the well, the whole of the emission-reception cycle being within a given configuration identical for all the cycles in the series so as to obtain at least a first set of recordings of signals sent back by the discontinuities around the well;
- repeating the previous phase with an emission-reception array having a configuration different from the first, so as to obtain a second set of recordings; and
- comparing the different sets of recordings obtained so as to show up any geological discontinuities.

2. A method in accordance with claim 1, characterised in that emission means with a direction diagram with a limited opening are used.

3. A method in accordance with claim 1 or 2, characterised in that the recordings obtained using the directional emission and/or receiving means are compared with recordings obtained using other directional emission and/or directional receiving means having a different direction diagram.

4. A method in accordance with claim 3, characterised in that the orientation of each direction diagram is modified between each of the series of cycles.

5. A method in accordance with one of the previous claims, characterised in that at least two series of emission-reception cycles are run with the emission and/or reception means but changing the transversal position of the emission and/or reception means relative to the axis of the well for each series, at least one of the series being carried out with the directional emission and/or reception means.

6. A method in accordance with claim 5, characterised in that a specific direction diagram is made to correspond to each transversal position of the emission and/or reception means.

7. A method in accordance with one of the previous claims, characterised in that directional reception means are used whose direction diagram is oriented in a direction different from that in which emission has taken place so as to pick up by preference those waves sent back that have been subjected to more than one reflection.

8. A device for implementing the method in accordance with one of claims 1 to 6, characterised in that it comprises a combination of a well logging sonde (1), operating means (10) for moving the sonde along the well, at least one signal emission source (3), means for receiving emitted signals returned by discontinuities around the well, means (5) for rendering the source and/or signal reception means directional, means for transmitting the signals received to a recording unit (E) at the surface and means for processing the recordings obtained.

9. A device in accordance with claim 8, characterised in that the directional source has a unit (4) for emitting signals and a signal absorption unit (5) located over at least one section of the periphery of the emission unit.

10. A device in accordance with claim 9, characterised in that the reception means have at least one transducer receiver (R1, R2) associated with an absorption means arranged around the transducer.

11. A device in accordance with claim 9 or 10, characterised in that each selective absorption means has a cover provided with an elongate window (6) pervious to the signals emitted.

## Patentansprüche

1. Verfahren zur Erfassung und Be- bzw. Verarbeitung von in einer Bohrung und insbesondere in einer krummen Bohrung erhaltenen Signalen, das die Diskriminierung von geologischen Diskontinuitäten, welche beidseits der Bohrung gelegen sind und im wesentlichen die gleiche Orientierung wie sie aufweisen, erleichtert, umfassend die Verwendung eines Diagraphiewerkzeuges (1), das mit Signalsendungsmitteln (3) und Empfangsmitteln (R1, R2) zur Aufnahme der Signale, welche von umgebenden Formationen in Reaktion zu den übermittelten Signalen ausgehen, versehen ist, sowie Mitteln zum Verschieben des Werkzeuges längs der Bohrung, dadurch gekennzeichnet, daß es umfaßt:
- die Verwendung von Mitteln (5), um einen Teil wenigstens der Gesamtheit von den Sendungs- und Empfangsmitteln mit Richtcharakteristiken zu versorgen, in dem so der Gesamtheit eine spezielle Richtcharakteristikkonfiguration gegeben wird;
- die Realisierung mit dem Diagraphiewerkzeug von wenigstens einer Reihe von Signal-Sendungs-Empfangszyklen beim Verschieben des Werkzeuges längs der Bohrung, wobei die Sendungs-Empfangsgesamtheit in einer bestimmten, für alle Zyklen der Reihe identischen Konfiguration ist, derart, um wenigstens einen ersten Aufzeichnungssatz von Sinalen, die durch die Diskontinuitäten um die Bohrung herum zurückstrahlen, zu erhalten;
- die Wiederholung des vorhergehenden Schrittes mit einer Sendungs-Empfangsgesamtheit, die eine zu der ersten verschiedene Konfiguration aufweist, derart, um einen zweiten Aufzeichnungssatz zu erhalten; und
- der Vergleich der verschiedenen erhaltenen Aufzeichnungssätze, um die geologischen Diskontinuitäten sichtbar zu machen.

2. Verfahren nach Anspruch 1, dadurch gekennzeichnet, daß man Emissionsmittel verwendet, die mit einem Richtcharakteristikdiagramm begrenzter Öffnung versehen sind.

3. Verfahren nach Anspruch 1 oder 2, dadurch gekennzeichnet, daß man die mit den Emissions- und/oder Empfangsmitteln mit Richtcharakteristiken erhaltenen Aufzeichnungen und die mit anderen Emissions- und/oder Empfangsmitteln mit Richtcharakteristiken erhaltenen Aufzeichnungen, die eine anderes Richtcharakteristikdiagramm besitzen, vergleicht.

4. Verfahren nach Anspruch 3, dadurch gekennzeichnet, daß man zwischen jeder der Reihen von Zyklen die Orientierung jedes Richtcharakteristikdiagramms ändert.

5. Verfahren nach einem der vorhergehenden Ansprüche, dadurch gekennzeichnet, daß man wenigstens zwei Reihen von Sendungs-Empfangszyklen mit den Sendungs- und/oder Empfangsmitteln realisiert, in dem für jede von diesen die quergerichtete Position der Sendungs- und/oder Empfangsmittel relativ zu der Achse der Bohrung verändert wird, wobei die eine wenigstens der Reihen mit den Sendungs- und/oder Empfangsmitteln mit Richtcharakteristiken durchgeführt wird.

6. Verfahren nach Anspruch 5, dadurch gekennzeichnet, daß daß man an jeder quergerichteten Position der Sendungs- und/oder Empfangsmittel ein besonderes Richtcharakteristikdiagramm übereinstimmend macht.

7. Verfahren nach einem der vorhergehenden Ansprüche, dadurch gekennzeichnet, daß man richtungsabhängige Empfangsmittel verwendet, von denen das Richtcharakteristikdiagramm entsprechend einer unterschiedlichen Richtung gegenüber derjenigen, in welcher die Sendung vorzugsweise stattfindet, orientiert ist, derart zum Aufnehmer der ankommenden Wellen, die einer Reflexion mehr unterzogen wurden.

8. Vorrichtung zur Durchführung des Verfahrens nach einem der Ansprüche 1 bis 6, dadurch gekennzeichnet, daß sie in Kombination umfaßt: eine Diagraphiesonde (1) für eine Bohrung, Betätigungsmittel (10), um die Sonde längs der Bohrung zu verschieben, wenigstens eine Signalsendungsquelle (3), Mittel zum Emfang von gesendeten, durch die Diskontinuitäten um die Bohrung herum zurückgestrahlten Signalen, Mittel (5), um der Quelle und/oder den Signalempfangsmitteln Richtcharakteristiken zu liefern, Mittel zur Übertragung von erhaltenen Signalen an eine Aufzeichnungsgesamtheit (E) an der Oberfläche und Mittel zur Be- bzw. Verarbeitung der erhaltenen Aufzeichnungen.

9. Vorrichtung nach Anspruch 8, dadurch gekennzeichnet, daß die Richtcharakteristikquelle eine Signalsendungselement (4) und ein Signalaufnahmemittel (5) umfaßt, das an einem Teil wenigstens des Umfangs von der Sendungsgesamtheit angeordnet ist.

10. Vorrichtung nach Anspruch 9, dadurch gekennzeichnet, daß die Empfangsmittel wenigstens einen Empfangsumformer (R1, R2) umfassen, der mit einem Aufnahmemittel, welches um den Umformer angeordnet ist, verbunden ist.

11. Vorrichtung nach Anspruch 9 oder 10, dadurch gekennzeichnet, daß jedes trennscharfe Aufnahmemittel eine Verkleidung umfaßt, die mit einen langgestreckten, den ausgesendeten Signalen transparentes Fenster (6) versehen ist.
